# EUROPÄISCHE PATENTANMELDUNG

(11) **EP 4 286 210 A1**
(43) Veröffentlichungstag der Anmeldung: **06.12.2023**
(21) Anmeldenummer: 23171620.0
(22) Anmeldetag: 04.05.2023
(51) Int. Cl.: B60L 53/14, B60L 53/80, B60S 5/06, H01M 10/42, B60K 1/04, E04H 1/12

(54) **VORRICHTUNG ZUR WARTUNG EINES ELEKTRISCH ANGETRIEBENEN LANDWIRTSCHAFTLICHEN FAHRZEUGS**

(30) Priorität: 25.05.2022 DE 102022113292
(71) Anmelder: Deere & Company, Moline, IL 61265 (US)
(72) Erfinder: VON HOLST, Christian, 68163 Mannheim (DE); SOBOTZIK, Joachim, 68163 Mannheim (DE)
(74) Vertreter: Dehnhardt, Florian Christopher

(57) **Zusammenfassung**

Die Erfindung betrifft eine Vorrichtung (10) zur Wartung eines elektrisch angetriebenen landwirtschaftlichen Fahrzeugs (14). Die Vorrichtung (10) enthält eine Ladestation (18, 20), eine Austauschstation (22) und einen Aufnahmeraum (12). Die Ladestation (18, 20) dient der elektrischen Aufladung einer Antriebsbatterie (16) des landwirtschaftlichen Fahrzeugs (14). Die Austauschstation (22) dient dem Austausch der Antriebsbatterie (16) des landwirtschaftlichen Fahrzeugs (14). Der Aufnahmeraum (12) dient der Aufnahme des landwirtschaftlichen Fahrzeugs (14).

## Beschreibung

Die Erfindung betrifft eine Vorrichtung zur Wartung eines elektrisch angetriebenen landwirtschaftlichen Fahrzeugs.

Ein elektrischer Batterieantrieb für landwirtschaftliche Fahrzeuge kann insbesondere bei einem Arbeitseinsatz auf dem Feld eine logistische und wartungstechnische Herausforderung sein.

Es ist daher Aufgabe der vorliegenden Erfindung, die Handhabung eines mit elektrischem Batterieantrieb ausgestatteten landwirtschaftlichen Fahrzeugs zu vereinfachen.

Diese Aufgabe wird durch eine Vorrichtung mit den Merkmalen des Patentanspruchs 1 gelöst.

Weitere vorteilhafte Ausgestaltungen der erfindungsgemäßen Vorrichtung gehen aus den Unteransprüchen hervor.

Gemäß Patentanspruch 1 weist eine Vorrichtung zur Wartung eines elektrisch angetriebenen landwirtschaftlichen Fahrzeugs (z.B. Traktor, Geländefahrzeug) eine Ladestation, eine Austauschstation und einen Aufnahmeraum auf.

Die Ladestation dient zur elektrischen Aufladung einer Antriebsbatterie des landwirtschaftlichen Fahrzeugs. Die Austauschstation dient dem Austausch der Antriebsbatterie. Der Aufnahmeraum dient der Aufnahme des landwirtschaftlichen Fahrzeugs.

Der Aufnahmeraum erleichtert eine geeignete Positionierung des landwirtschaftlichen Fahrzeugs (nachfolgend kurz Fahrzeug) zu seiner Wartung. Insbesondere können einzelne Wartungsaktivitäten dann einfacher automatisiert durchgeführt werden. Somit schafft die Vorrichtung mit dem kombinierten Vorhandensein der Ladestation, der Austauschstation und des Aufnahmeraumes die technischen und logistischen Voraussetzungen für eine effiziente Wartung des elektrisch angetriebenen Fahrzeugs mit geringem personellen Arbeitsaufwand. Insbesondere kann die Antriebsbatterie automatisiert gehandhabt werden, z.B. aufgeladen oder gegen eine vollständig aufgeladene Batterie ausgetauscht werden. Auch bietet der Aufnahmeraum einen Schutz des Fahrzeugs bzw. der austauschbaren Antriebsbatterie gegenüber Diebstahl oder Vandalismus.

Auf diese Weise bietet die Vorrichtung eine vorteilhafte logistische Unterstützung bei der Durchführung landwirtschaftlicher Arbeiten durch elektrisch angetriebene landwirtschaftliche Fahrzeuge.

Die vorgenannte Wartung kann unterschiedliche Aktivitäten bezüglich des landwirtschaftlichen Fahrzeugs beinhalten. Wie bereits erwähnt, sind solche Aktivitäten insbesondere ein Aufladen der Antriebsbatterie an der Ladestation oder ein Austausch der Antriebsbatterie an der Austauschstation. Weitere Wartungsaktivitäten können vorzugsweise automatisiert mittels eines geeigneten Steuersystems durchgeführt werden.

Die logistische Effizienz wird vorzugsweise dadurch unterstützt, dass die Vorrichtung mobil ausgebildet ist. Hierdurch können die technischen Voraussetzungen für die gewünschten Wartungsaktivitäten bei elektrisch angetriebenen landwirtschaftlichen Fahrzeugen örtlich flexibel bereitgestellt werden. Mit Hilfe der mobilen Vorrichtung oder einer Mehrzahl solcher mobilen Vorrichtungen können landwirtschaftliche Flächen, Plantagen und dergleichen dann durch elektrisch angetriebene landwirtschaftliche Fahrzeuge auch ohne eine kostenintensive stationäre Infrastruktur effizient bearbeitet werden.

Die Vorrichtung ist insbesondere als ein mobiler Container ausgebildet. Dieser lässt sich transporttechnisch mittels entsprechender Transportmittel (z.B. Lkw, Schiff, Zug) und ggf. weiterer Hilfsmittel effizient handhaben. Somit lassen sich im ländlichen Raum örtlich und zeitlich begrenzte Infrastrukturen für elektrisch angetriebene landwirtschaftliche Fahrzeuge kostengünstig und sehr zeitnah bereitstellen.

Vorteilhaft handelt es sich bei dem mobilen Container um eine Vorrichtung, die standardmäßig hergestellt wird und folglich in einer großen Anzahl verhältnismäßig kostengünstig verfügbar ist. Die Basis der Vorrichtung ist deshalb vorzugsweise ein standardmäßiger Seecontainer, z.B. als eine 20-Zoll-Variante oder 40-Zoll-Variante hinsichtlich der Containerlänge.

Als mobiler Container ist die Vorrichtung (z.B. aus Stahl) mechanisch besonders stabil aufgebaut und kann im Einsatzgebiet auf unterschiedlichen Untergründen und ggf. auch ohne Fundament stabil fixiert oder befestigt werden.

Eine containerartige Vorrichtung hat außerdem den Vorteil, dass sie mit geringem Ausstattungsaufwand zusätzliche Funktionsbereiche oder Funktionsräume bereitstellen kann. Beispielsweise kann ein Teil des Containerraumes mit einer standardmäßig verfügbaren Ausstattung für Werkstätten, Schrank- oder Lagerräume, Büroräume oder Wohn- und Schlafräume, Dusche, Toilette eingerichtet werden.

Vorzugsweise enthält die Vorrichtung zwei Aufnahmeräume für jeweils ein landwirtschaftliches Fahrzeug auf. Solche Vorrichtungen können die gewünschte Infrastruktur für elektrisch angetriebene landwirtschaftliche Fahrzeuge im ländlichen Raum noch effizienter bereitstellen, wenn bei den landwirtschaftlichen Arbeiten eine Flotte mit einer größeren Anzahl landwirtschaftlicher Fahrzeuge tätig ist. Beispielsweise wird hierbei ein 40-Zoll-Seecontainer verwendet, welcher entlang der Containerlänge zwei voneinander abgewandt zugängliche Aufnahmeräume enthält.

Die Ladestation der Vorrichtung kann an ein vorhandenes Stromnetz angeschlossen sein. Oftmals steht ein Stromnetz für den gewünschten (insbesondere mobilen) spezifischen Einsatz der Vorrichtung allerdings nicht zur Verfügung. Deshalb enthält die Vorrichtung vorzugsweise eine eigene Stromerzeugungseinheit (z.B. mittels Gasturbine, Verbrennungsmotor, Brennstoffzelle), welche an die Ladestation angeschlossen ist. Hierdurch kann die Vorrichtung flexibel in unterschiedlichen landwirtschaftlichen Gebieten eingesetzt werden. Dies unterstützt eine verbesserte Reichweite des Fahrzeugs während des Arbeitseinsatzes.

Alternativ kann der Strom über ein Mini-Nuklearreaktorsystem bereitgestellt werden.

Als Kraftstoff für die Stromerzeugungseinheit können beispielsweise fossile Brennstoffe, synthetische Brennstoffe (z.B. E-Fuels), Biogas, LPG, CNG, Methanol oder Wasserstoff verwendet werden. Der Kraftstoff kann mittels mobiler oder stationärer Vorratsspeicher bereitgestellt werden oder über Versorgungsleitungen an die Stromerzeugungseinheit herangeführt werden.

Vorzugsweise weist die Vorrichtung selbst eine Speichereinheit zur Speicherung des Kraftstoffes auf, welcher für den Betrieb der Stromerzeugungseinheit benötigt wird. Auch ein Stromspeicher kann in die Vorrichtung integriert sein. Hierdurch wird ein autonomer Betrieb der Vorrichtung unterstützt.

In einer bevorzugten Ausführungsform weist die Vorrichtung eine Sensorik für mindestens eine der folgenden Funktionen auf:
- Erkennung bzw. Identifizierung des Fahrzeugs,
- Erkennung einer aktuellen Position des Fahrzeugs,
- Erkennung eines aktuellen Funktionszustandes des Fahrzeugs.

Die Sensorik ist vorzugsweise in einem Eingangsbereich des Aufnahmeraumes der Vorrichtung angeordnet. Die Sensorik kann mit ihren Sensorsignalen zu einer effizienten elektronischen Kommunikation zwischen der Vorrichtung und dem Fahrzeug beitragen. Hierdurch kann eine automatisierte bzw. autonome Durchführung verschiedener Wartungsaktivitäten bezüglich des Fahrzeugs unterstützt werden.

Die Sensorik kann verschiedene geeignete Sensoren (z.B. Kamera, Laser, Radar, Lidar, Ultraschall) beinhalten.

Beispielsweise kann mit Hilfe der Sensorsignale zunächst das sich nähernde Fahrzeug identifiziert und (z.B. mittels eines elektronischen Protokolls) geprüft werden, ob die Vorrichtung für dieses Fahrzeug vorgesehen ist. Nach einer erfolgreichen Prüfung kann wiederum mittels der Sensorik die aktuelle Position des Fahrzeugs erkannt werden, um beispielsweise ein autonomes Fahren (ggf. inklusive Lenken und Bremsen) des Fahrzeugs in eine vorbestimmte Wartungsposition innerhalb des Aufnahmeraumes zu veranlassen. Auch ein aktueller Funktionszustand (z.B. Reifen, Leuchten, Karosserie, Datenversion) des Fahrzeugs kann mit einer geeigneten Sensorik erkannt werden, deren Sensorsignale beispielsweise im Rahmen einer Service- und/oder Diagnosefunktion für das Fahrzeug ausgewertet werden.

Wie bereits erwähnt, bietet die Vorrichtung ein Aufladen der Antriebsbatterie oder einen Austausch der Antriebsbatterie als Wartungsaktivitäten für das Fahrzeug. Die Wartungsaktivitäten werden vorzugsweise mittels eines geeigneten Steuersystems zumindest teilweise automatisiert durchgeführt, so dass der personelle Aufwand für die gewünschte Wartung des Fahrzeugs kostensparend reduziert ist. Hierbei können Sensorsignale der erwähnten Sensorik als Eingangssignale von dem Steuersystem empfangen werden.

Eine automatisierte Durchführung sensibler Wartungsaktivitäten (z.B. Austausch der Antriebsbatterie sowie die Herstellung bzw. das Lösen der elektrischen Kontaktierung) bietet außerdem den Vorteil, dass etwaige Beschädigungen der Antriebsbatterie oder des Fahrzeugs zuverlässig vermieden werden können.

Vorzugsweise wird mittels des Steuersystems mindestens eine der folgenden Wartungsaktivitäten automatisiert bzw. autonom gesteuert:
- Steuerung einer Fahrzeugfunktion des Fahrzeugs, z.B. autonomes Fahren bzw. Steuern des Fahrzeugs in Richtung einer vorbestimmten Wartungsposition innerhalb des Aufnahmeraumes,
- Anschließen des Fahrzeugs an die Ladestation,
- Aufladen der Antriebsbatterie des Fahrzeugs,
- Ausbauen der Antriebsbatterie aus dem Fahrzeug,
- Einsetzen bzw. Einbau einer aufgeladenen Antriebsbatterie in das Fahrzeug,
- Verbinden des Fahrzeugs mit einer Service- und/oder Diagnosefunktion,
- Programmieren des Fahrzeugs mit aktualisierten Daten, z.B. zur Aktualisierung einer Datenversion in einer Steuereinheit des Fahrzeugs.

Eine automatische Programmierung des Fahrzeugs mit aktualisierten Daten erfolgt beispielsweise dann, wenn die Antriebsbatterie gegen eine Batterie mit einer anderen Kapazität ausgetauscht wird und folglich das Fahrzeug bzw. dessen Steuereinheit über die geänderten Batterie-Parameterdaten informiert werden muss.

Das Steuersystem ist vorzugsweise mit einem Computer ausgestattet, welcher Steuerungsalgorithmen und Daten für die Wartungsaktivitäten zur Verfügung stellen kann.

Der Betriebsstrom für das Steuersystem und ggf. auch für weitere Funktionen der Vorrichtung kann von der Stromerzeugungseinheit geliefert werden. Zusätzlich kann eine Hilfs-Batterie für die temporäre Versorgung einzelner Funktionen (z.B. Steuersystem, Austauschstation, Beleuchtung) der Vorrichtung mit Betriebsstrom vorgesehen sein, so dass auch ohne ein externes Stromnetz und bei inaktiver oder defekter Stromerzeugungseinheit ein Betrieb der Vorrichtung (mit Ausnahme einer Aufladung der Antriebsbatterie) möglich ist. Die Hilfs-Batterie wird vorzugsweise durch mindestens eine autonome Stromquelle (z.B. PV-Fläche, Windrad) gespeist. Diese Stromquelle kann raumsparend beispielsweise auf einer Dachfläche der Vorrichtung angeordnet werden.

In einer bevorzugten Ausführung ist das Steuersystem an eine Netzwerkantenne angeschlossen. Diese Netzwerkantenne ist an einer geeigneten Stelle der Vorrichtung angeordnet und ermöglicht eine datentechnische Verbindung des Steuersystems mit einem vorhandenen externen Netzwerk (z.B. Internet). Auf diese Weise kann das Steuersystem, insbesondere sein Computer, über das externe Netzwerk (z.B. von einer externen Datenzentrale) alle relevanten Informationen für die betroffenen landwirtschaftlichen Fahrzeuge und für deren Wartung erhalten und in einem Datenspeicher speichern. Beispielsweise erhält das Steuersystem Identifizierungsdaten über alle Fahrzeuge, welche in dieser Vorrichtung gewartet werden dürfen. Außerdem kann das Steuersystem über das Netzwerk aktualisierte Daten herunterladen, welche während einer Wartung für eine aktualisierte Programmierung des Fahrzeugs notwendig sind.

Im Falle eines Transports der Vorrichtung kann das Steuersystem automatisch geeignete Diagnoseprozeduren starten und durchführen.

In einer weiteren bevorzugten Ausführungsform ist das Steuersystem an eine Signalantenne angeschlossen, welche an einer geeigneten Stelle der Vorrichtung angeordnet ist. Hierdurch kann auf dem landwirtschaftlichen Arbeitsgebiet ein drahtloses lokales Funknetzwerk (z.B. Wi-Fi) mit entsprechenden Signalantennen weiterer Vorrichtungen aufgebaut werden. Dieses lokale Funknetzwerk kann mit den Fahrzeugen auf der landwirtschaftlichen Arbeitsfläche kommunizieren und auf diese Weise einen logistisch und wirtschaftlich effizienten Einsatz der Fahrzeuge oder der Fahrzeugflotte koordinieren. Beispielsweise kann das Funknetzwerk mittels einer Datenkommunikation zwischen dem Steuersystem und den Fahrzeugen ein automatisiertes bzw. autonomes Arbeiten der Fahrzeuge auf der landwirtschaftlichen Fläche unterstützen. Die Verwendung eines lokalen Funknetzwerks bietet sich in Fällen an, in denen die Übertragungsleistung einer öffentlich verfügbaren Dateninfrastruktur nicht hinreichend ist. Dies trifft für den ländlichen Raum häufig zu.

Außerdem kann das Steuersystem, insbesondere sein Computer, einen Optimierungsalgorithmus bezüglich zukünftiger Ladevorgänge an der Ladestation der Vorrichtung für mehrere Fahrzeuge durchführen. Für jeden Zeitpunkt kann die für ein Fahrzeug jeweils passendste Vorrichtung ermittelt werden. Dies unterstützt ein effizientes Energiemanagement für die betroffenen Fahrzeuge. Hierbei kann der Optimierungsalgorithmus verschiedene Daten aus einer datentechnischen Interaktion zwischen dem Steuersystem einerseits und einer Benutzerschnittstelle (z.B. fahrzeugintern oder Smart Phone) oder einem autonomen Betriebsprogramm des Fahrzeugs oder einer Fahrzeugflotte andererseits berücksichtigen.

Über die Benutzerschnittstelle können einem Benutzer des Fahrzeugs relevante Informationen, z.B. betreffend der vorgenannten Optimierung, mitgeteilt werden.

An einer Außenseite der Vorrichtung ist vorzugsweise eine Ladeeinheit zur elektrischen Aufladung einer Batterie eines weiteren Fahrzeugs angeordnet. Diese Ladeeinheit wird vorteilhaft ebenfalls von der Stromerzeugungseinheit der Vorrichtung gespeist. Hierdurch ermöglicht die Vorrichtung zusätzlich eine elektrische Aufladung anderweitiger elektrisch betriebener Fahrzeuge, wie Automobile, Lastkraftwagen, Pedelecs oder E-Fahrräder, deren Fahrer (z.B. Aufsichtspersonal) im Zusammenhang mit den Arbeitsaktivitäten der elektrisch angetriebenen landwirtschaftlichen Fahrzeuge stehen.

Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines ersten Ausführungsbeispiels der erfindungsgemäßen Vorrichtung,
- Fig. 2: eine schematische Darstellung eines weiteren Ausführungsbeispiels der erfindungsgemäßen Vorrichtung,
- Fig. 3: eine schematische Darstellung eines weiteren Ausführungsbeispiels der erfindungsgemäßen Vorrichtung,
- Fig. 4: eine schematische Darstellung eines weiteren Ausführungsbeispiels der erfindungsgemäßen Vorrichtung, und
- Fig. 5: eine Vorderansicht der erfindungsgemäßen Vorrichtung entsprechend Pfeilrichtung V in Fig. 1.

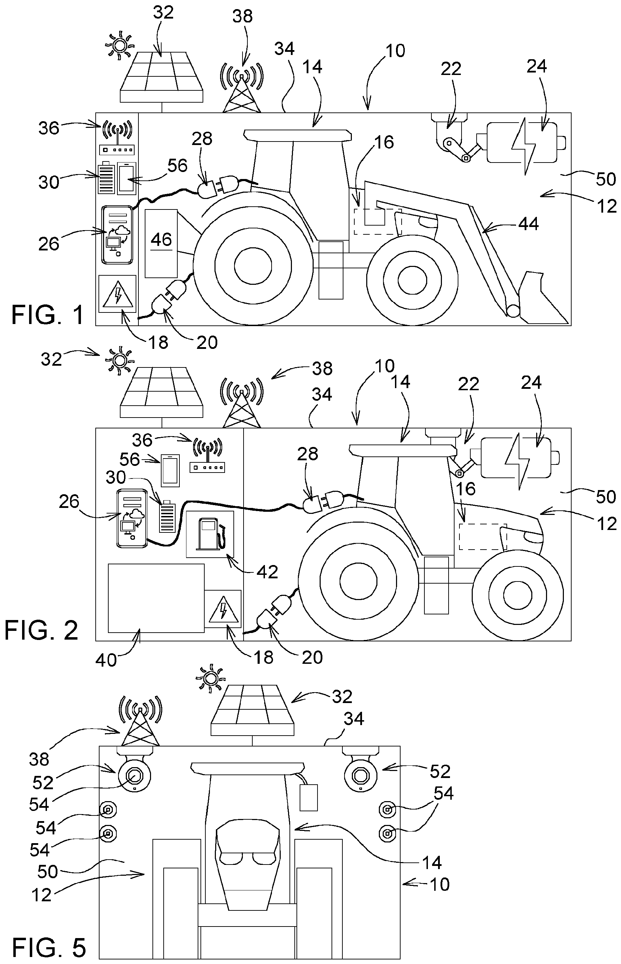

Fig. 1 zeigt eine Vorrichtung 10 mit einem Aufnahmeraum 12, in dem ein landwirtschaftliches Fahrzeug 14 in Form eines Traktors geparkt ist. Das Fahrzeug 14 wird elektrisch angetrieben und enthält zu diesem Zweck vorzugsweise in einem Frontbereich eine hier lediglich schematisch angedeutete Antriebsbatterie 16.

Zur elektrischen Aufladung der Antriebsbatterie 16 enthält die Vorrichtung 10 eine Ladestation 18 mit einem an das Fahrzeug 14 anzuschließenden Ladekabel 20. Außerdem enthält die Vorrichtung 10 eine Austauschstation 22 zum Austausch der Antriebsbatterie 16 gegen eine vollständig geladene Austauschbatterie 24.

Darüber hinaus enthält die Vorrichtung 10 ein Steuersystem 26 mit einem Computer zur Steuerung verschiedener Wartungsaktivitäten bezüglich des Fahrzeugs 14. Beispielsweise kann das Steuersystem 26 mittels einer Service- und Diagnoseverbindung 28 das Fahrzeug 14 unter anderem durch Auslesen eines Versions- bzw. Fehler-Codes überprüfen und erforderlichenfalls aktuelle Daten- und Programmversionen installieren bzw. Maßnahmen zur Fehlerbehebung durchführen.

Der Betriebsstrom für den Betrieb verschiedener Funktionen (z.B. für das Steuersystem 26 und die Austauschstation 22) der Vorrichtung 10 wird vorzugsweise über die Stromversorgung für die Ladestation 18 bereitgestellt. Als Sicherheitsmaßnahme ist eine Hilfs-Batterie 30 vorgesehen, welche den erforderlichen Betriebsstrom auch dann liefern kann, wenn die Stromversorgung für die Ladestation 18 ausfallen sollte. Die Hilfs-Batterie 30 wird mit Strom geladen, der von einer Photovoltaik-Anlage 32 erzeugt wird. Letztere kann platzsparend auf einem Dach 34 der Vorrichtung 10 montiert werden.

Das Steuersystem 26 ist an eine Netzwerkantenne 36 angeschlossen. Auf diese Weise kann das Steuersystem 26 datentechnisch mit einem vorhandenen externen Netzwerk (z.B. Internet) verbunden werden.

Darüber hinaus ist das Steuersystem 26 an eine Signalantenne 38 angeschlossen. Hierdurch kann im Bereich des landwirtschaftlichen Arbeitsgebietes ein lokales Funknetzwerk mit mehreren Fahrzeugen 14 und/oder mehreren Vorrichtungen 10 realisiert werden.

Die Stromversorgung für die Ladestation 18 wird vorzugsweise über ein externes Stromnetz oder über eine vorrichtungsinterne Stromerzeugungseinheit 40 realisiert (Fig. 2). Bei der Ausführungsform der Vorrichtung 10 gemäß Fig. 2 wird auch ein Kraftstoff für den Betrieb der Stromerzeugungseinheit 40 vorrichtungsintern bereitgestellt. Hierzu ist der Kraftstoff in einer Speichereinheit 42 innerhalb der Vorrichtung 10 gespeichert.

Bei der Vorrichtung 10 gemäß Fig. 1 und Fig. 2 handelt es sich um einen mobilen Container mit identischen Außenmaßen, so dass für beide Varianten ein standardmäßig hergestellter Container, z.B. ein Seecontainer mit einer Länge von 20 Zoll, verwendet werden kann. Beide Varianten unterscheiden sich im Wesentlichen durch die in der Vorrichtung 10 gemäß Fig. 1 nicht vorhandene Stromerzeugungseinheit 40 und Tankeinheit 42. Bei der Variante gemäß Fig. 1 wird die Ladestation 18 dann vorzugsweise über ein externes Stromnetz oder einen externen Stromspeicher versorgt. Aus diesem Grund sind die Aufnahmeräume 12 bei beiden Varianten unterschiedlich dimensioniert. Während der größere Aufnahmeraum 12 ein Fahrzeug 14 bzw. einen Traktor mit einem Frontlader 44 und einem heckseitigen Anbaugerät 46 aufnehmen kann (Fig. 1), ist der kleinere Aufnahmeraum 12 nur zur Aufnahme eines Fahrzeugs 14 ohne solche Arbeitsgeräte geeignet (Fig. 2).

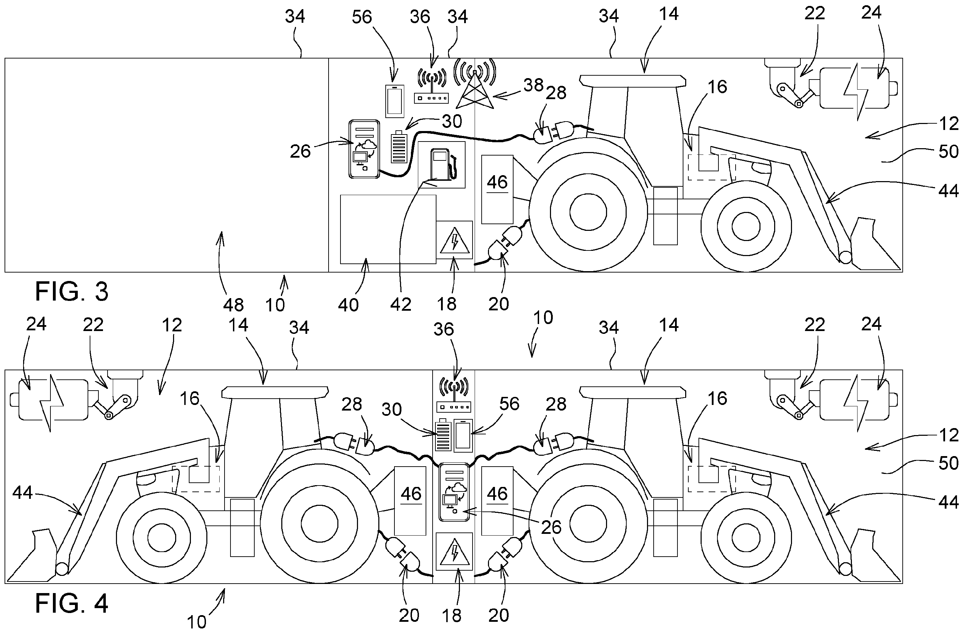

Fig. 3 zeigt die mobile Vorrichtung 10 in einer größeren Containervariante z.B. mit einer Länge von 40 Zoll. Hierdurch ergeben sich weitere Möglichkeiten zur Ausgestaltung und Nutzung der Vorrichtung 10. Die Vorrichtung 10 kann einen zusätzlichen Raum 48 für unterschiedliche Zwecke (z.B. Büro, Dusche, Toilette, Pausenraum, Lagerraum) aufweisen (Fig. 3) oder einen zweiten Aufnahmeraum 12 für ein zweites landwirtschaftliches Fahrzeug 14 enthalten (Fig. 4). Bei der Vorrichtung 10 gemäß Fig. 4 ist dann üblicherweise kein Platz für eine Integration der Stromerzeugungseinheit 40 und der Tankeinheit 42.

Die Vorrichtung 10 gemäß Fig. 4 kann abgewandelt werden, indem mindestens ein Aufnahmeraum 12 gegen einen kürzeren Aufnahmeraum 12 gemäß Fig. 2 ausgetauscht wird. Dann hat auch die Vorrichtung 10 gemäß Fig. 4 den notwendigen Raum zur Integration der Stromerzeugungseinheit 40 und der Tankeinheit 42.

In Fig. 5 ist erkennbar, dass in einem Eingangsbereich 50 des Aufnahmeraumes 12 eine Sensorik 52 mit mehreren Sensoreinheiten 54 (z.B. Kamera, Laser, Radar, Lidar, Ultraschall) angeordnet ist. Die Sensorik 52 ist vorzugsweise mit dem Steuersystem 26 verbunden und kann Sensorsignale als Eingangssignale an das Steuersystem 26 senden. Mittels der Sensorik 52 kann kabellos insbesondere ein ankommendes Fahrzeug 14 identifiziert werden und/oder eine aktuelle Position des Fahrzeugs 14 erkannt werden und/oder ein aktueller Funktionszustand des Fahrzeugs 14 erkannt werden.

Ein Einfahren des Fahrzeugs 14 in den Aufnahmeraum 12 und dessen Wartung (z.B. Aufladen der Antriebsbatterie 16) kann von einer erfolgreichen Identifizierung des Fahrzeugs 14 durch die Vorrichtung 10 abhängig sein.

Sobald sich das Fahrzeug 14 in seiner vorbestimmten Position innerhalb des Aufnahmeraumes 12 befindet und in dieser Position automatisiert durch geeignete Mittel lösbar fixiert bzw. arretiert ist, kann die Vorrichtung 10 eine automatisierte Wartung des Fahrzeugs 14 durchführen. Beispielsweise kann das Fahrzeug 14 eine automatische Öffnung des Batteriefaches veranlassen. Danach kann ein automatisierter Mechanismus der Austauschstation 22 die entladene Antriebsbatterie 16 elektrisch trennen und entnehmen und danach in eine Lagerposition überführen. Daraufhin kann die Austauschstation 22 die vollständig geladene Austauschbatterie 24 erfassen und diese in das Fahrzeug 14 einschließlich einer elektrischen Kontaktierung einbauen. Danach kann das Fahrzeug 14 das Batteriefach wieder automatisch schließen.

Weiterhin kann die Austauschstation 22 die aus dem Fahrzeug 14 entnommene und gelagerte Antriebsbatterie 16 in eine Ladeposition überführen, in der die entladene Antriebsbatterie 16 automatisiert an die Ladestation 18 angeschlossen und elektrisch aufgeladen wird.

Eine elektronische Kommunikation zwischen dem Fahrzeug 14, dem Steuersystem 26 und ggf. einem Benutzer des Fahrzeugs 14 kann eine individuelle Entscheidung unterstützen, ob die Antriebsbatterie 16 für eine rasche Fortsetzung des landwirtschaftlichen Arbeitseinsatzes ausgetauscht werden soll oder ob die Antriebsbatterie 16 im Fahrzeug 14 verbleibend aufgeladen werden soll. Im letzteren Fall parkiert das Fahrzeug 14 während der Aufladung im Aufnahmeraum 12 und kann vorzugsweise über die Service- und Diagnoseverbindung 28 mit aktualisierten Daten- oder Programmversionen programmiert werden.

Die vorgenannte elektronische Kommunikation kann auch zur Unterstützung anderer Wartungsaktivitäten bezüglich des Fahrzeugs 14 eingesetzt werden. In die Kommunikation können deshalb auch weitere technische Funktionen der Vorrichtung 10, wie etwa die Stromerzeugungseinheit 18, ein Arretierungsmechanismus zur lösbaren Arretierung des Fahrzeugs 14 in dem Aufnahmeraum 12, die Hilfs-Batterie 30 oder die Stromquelle 32, eingebunden sein.

Die elektronische Kommunikation kann kabellos und/oder mittels der Service- und Diagnoseverbindung 28 und/oder mittels einer Benutzerschnittstelle 56 (z.B. Smart Phone) durchgeführt werden.

Der guten Ordnung halber sei erwähnt, dass zumindest einige der in den Zeichnungen offenbarten Details schematisch und/oder nicht notwendigerweise maßstäblich dargestellt sind.

## Patentansprüche

1. Vorrichtung (10) zur Wartung eines elektrisch angetriebenen landwirtschaftlichen Fahrzeugs (14), wobei die Vorrichtung (10)
- eine Ladestation (18, 20) zur elektrischen Aufladung einer Antriebsbatterie (16) des landwirtschaftlichen Fahrzeugs (14) aufweist,
- eine Austauschstation (22) zum Austausch der Antriebsbatterie (16) des landwirtschaftlichen Fahrzeugs (14) aufweist, und
- einen Aufnahmeraum (12) zur Aufnahme des landwirtschaftlichen Fahrzeugs (14) aufweist.

2. Vorrichtung nach Anspruch 1, **dadurch gekennzeichnet, dass** sie mobil ausgebildet ist, insbesondere als ein mobiler Container (10) ausgebildet ist.

3. Vorrichtung nach Anspruch 1 oder 2, **dadurch gekennzeichnet, dass** sie zwei Aufnahmeräume (12) für jeweils ein landwirtschaftliches Fahrzeug (14) aufweist.

4. Vorrichtung nach einem der vorhergehenden Ansprüche, **dadurch gekennzeichnet, dass** sie eine Stromerzeugungseinheit (40) aufweist, welche an die Ladestation (18, 20) angeschlossen ist.

5. Vorrichtung nach Anspruch 4, **dadurch gekennzeichnet, dass** sie eine Speichereinheit (42) aufweist zur Speicherung eines Kraftstoffes für den Betrieb der Stromerzeugungseinheit (40) .

6. Vorrichtung nach einem der vorhergehenden Ansprüche, **dadurch gekennzeichnet, dass** sie eine Sensorik (52, 54) aufweist für mindestens eine der folgenden Funktionen:
- Erkennung des landwirtschaftlichen Fahrzeugs (14),
- Erkennung einer aktuellen Position des landwirtschaftlichen Fahrzeugs (14),
- Erkennung eines aktuellen Funktionszustands des landwirtschaftlichen Fahrzeugs (14).

7. Vorrichtung nach einem der vorhergehenden Ansprüche, **dadurch gekennzeichnet, dass** sie ein Steuersystem (26) zur Steuerung mindestens einer der folgenden Wartungsaktivitäten aufweist:
- Steuerung einer Fahrzeugfunktion des landwirtschaftlichen Fahrzeugs (14),
- Anschließen des landwirtschaftlichen Fahrzeugs (14) an die Ladestation (18, 20),
- Aufladen der Antriebsbatterie (16) des landwirtschaftlichen Fahrzeugs (14),
- Ausbauen der Antriebsbatterie (16) aus dem landwirtschaftlichen Fahrzeug (14),
- Einsetzen einer aufgeladenen Antriebsbatterie (24) in das landwirtschaftliche Fahrzeug (14),
- Verbinden des landwirtschaftlichen Fahrzeugs (14) mit einer Service- und/oder Diagnosefunktion (28),
- Programmieren des landwirtschaftlichen Fahrzeugs (14) mit aktualisierten Daten (26).

8. Vorrichtung nach Anspruch 7, **dadurch gekennzeichnet, dass** das Steuersystem (26) an eine Netzwerkantenne (36) zur Verbindung mit einem externen Netzwerk angeschlossen ist.

9. Vorrichtung nach Anspruch 7 oder 8, **dadurch gekennzeichnet, dass** das Steuersystem (26) an eine Signalantenne (38) zum Aufbau eines lokalen Funknetzwerkes angeschlossen ist.

10. Vorrichtung nach einem der vorhergehenden Ansprüche, **dadurch gekennzeichnet, dass** sie eine Hilfs-Batterie (30) zur temporären Versorgung einer Funktion (22, 26) mit einem Betriebsstrom aufweist, wobei die Hilfs-Batterie (30) durch eine autonome Stromquelle (32, 38) gespeist ist.
